(19) Europäisches Patentamt

European Patent Office

Office européen des brevets

(11) **EP 1 657 523 A1**

(12) **EUROPÄISCHE PATENTANMELDUNG**

(43) Veröffentlichungstag:
**17.05.2006 Patentblatt 2006/20**

(51) Int Cl.:
*G01B 11/24* (2006.01) *G01B 11/245* (2006.01)

(21) Anmeldenummer: 05109866.3

(22) Anmeldetag: **24.10.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **12.11.2004 DE 102004054802**

(71) Anmelder: **Voith Paper Patent GmbH**
**89522 Heidenheim (DE)**

(72) Erfinder:
• **Stibi, Bernd**
**88069, Tettnang (DE)**
• **Mokesch, Hermann**
**88212, Ravensburg (DE)**

(54) **Verfahren zur Messung von Eigenschaften eines Rotationskörpers**

(57) Die Erfindung betrifft ein Verfahren zur Bestimmung einer Eigenschaft (z.B. Kontur, Rundlauf) eines rotierenden Körpers (z.B. einer Walze) mit folgenden Schritten:
Messen mittels eines Messverfahrens, bei dem sich das erhaltene Signal aus N Eigenschaften (z.B. mechanische Schwingungen und Kontur) zusammensetzt, wobei die zu bestimmende Eigenschaft darin enthalten ist, Messen mittels zumindest eines anderen Messverfahrens, bei dem sich das erhaltene Signal aus nur einem Teil der N Eigenschaften zusammensetzt und Ermitteln der Eigenschaft aus den erhaltenen Messsignalen. Hierzu wird insbesondere vorgeschlagen, ein Distanzmessverfahren (Triangulationssensor 3) und daneben ein interferometrisches Verfahren (Laservibrometer oder Radar-Doppler-Messsystem 5) einzusetzen.

Fig.1

EP 1 657 523 A1

**Beschreibung**

Diese Erfindung betrifft ein Verfahren zur Bestimmung einer bestimmten Eigenschaft eines rotierenden Körpers, wie bspw. Oberflächenkontur der Walzenoberfläche bzw. Rundlauf, Schwingungszustand, Durchbiegung und dgl.

Ein solches Verfahren ist bspw., aber nicht ausschließlich zur Messung solcher Eigenschaften in einer bahnverarbeitenden Maschine, wie bspw. einer Papier-, oder Karton-, oder Tissuemaschine oder aber in Walzenschleifmaschinen anwendbar.

Beim Messen bspw. des radialen Rundlaufs von Rotationskörpern, wie bspw. Walzen in einer Papiermaschine, wird bei den aus dem Stand der Technik bekannten Verfahren mit Hilfe von einem oder mehreren Abstandssensoren ein Signal aufgenommen.

Hierbei wird der Abstand von einem fixen Punkt zur Walzenoberfläche gemessen. Ist der Querschnitt der Walze exakt rund, so wird keine Abstandsänderung gemessen. Hat der Querschnitt Ungleichmäßigkeiten bspw. in Form von Beulen oder Wellen, misst der Abstandssensor einen sich ständig ändernden Abstand.

Dieses Messergebnis gibt die Unregelmäßigkeit der Walzenoberfläche an, sofern der Drehpunkt der rotierenden Walze sich nicht bewegt.

Bewegt sich aber der Drehpunkt, bspw. aufgrund von mechanischen Schwingungen, dann misst ein Abstandssensor auch dann eine Abstandsänderung, wenn der Querschnitt perfekt ist und keine Unregelmäßigkeiten in Form von bspw. Beulen und Wellen aufweist.

Dies bedeutet, dass mit einem einzigen Abstandssensor, keine Unterscheidung zwischen mechanischen Schwingungen der Walze und Ungleichmäßigkeiten in der Oberflächenkontur der Walzenoberfläche getroffen werden kann.

Daraus folgt, dass bei Verwendung nur eines einzige n Abstandssensors, ein Signal gemessen wird , welches sich aus der Überlagerung der Oberflächenkontur der Walzenoberfläche und mechanischen Schwingungen der Walze zusammensetzt.

Aus dem Stand der Technik ist ein Verfahren bekannt, bei dem vier Abstandssensoren über einen Winkel von 180° über den Walzenumfang angeordnet sind. Die Anwendung dieses Verfahrens führt bei Walzen zu Problemen, die nur bedingt zugänglich sind. Des weiteren ist das Verfahren kompliziert in der Durchführung.

Es ist die Aufgabe der vorliegenden Erfindung ein Verfahren vorzuschlagen, mit dem eine bestimmte Eigenschaft eines rotierenden Körpers, insbesondere einer Walze oder eines Zylinders, bei begrenztem Platzbedarf für die Messanordnung einfach und exakt und ohne Überlagerung einer anderen Eigenschaft gemessen werden kann.

Die Aufgabe wird durch ein Verfahren zur Bestimmung einer bestimmten Eigenschaft eines rotierenden Körpers mit folgenden Schritten gelöst:

-   Messen mittels eines Messverfahrens, bei dem sich das erhaltene Signal aus N Eigenschaften zusammensetzt, wobei die zu bestimmende Eigenschaft darin enthalten ist,
-   Messen mittels zumindest eines anderen Messverfahrens, bei dem sich das erhaltene Signal bzw. die erhaltenen Signale aus nur einem Teil der N Eigenschaften zusammensetzt bzw. zusammensetzen,
-   Ermitteln der bestimmten Eigenschaft aus den erhaltenen Signalen.

Dem erfindungsgemäßen Verfahren liegt die Erkenntnis zugrunde, verschiedene Messverfahren geschickt miteinander zu kombinieren und somit Signale mit unterschiedlichem Informationsgehalt bzgl. der Überlagerung von Eigenschaften eines rotierenden Körpers zu erzeugen. Somit können redundante Anteile der Signale eliminieren werden.

Hierdurch ist es möglich, die bestimmte Eigenschaft eindeutig aus der Berücksichtigung der Signale zu erhalten.

Vorteilhafte Ausgestaltungen und Weiterbildungen der Erfindung sind in den Unteransprüchen angegeben.

Nach einer bevorzugten Ausgestaltung der Erfindung wird aus den gemessenen Signalen ein eindeutig bestimmtes Gleichungssystem, insbesondere lineares Gleichungssystem, erstellt und aus dem Gleichungssystem die bestimmte Eigenschaft ermittelt.

Eine konkrete Weiterbildung der Erfindung sieht vor, dass mit dem zumindest einen anderen Messverfahren (N-1) Signale ermittelt werden, die sich jeweils aus der Überlagerung von (N-1) Eigenschaften zusammensetzen. Hierbei setzen sich alle (N-1) Signale aus zumindest einer gemeinsamen Eigenschaft zusammen. Des weiteren unterscheiden sich die (N-1) Signale in zumindest einer Eigenschaft.

Beispielhaft bedeutet wird mit dem ersten Messverfahren ein Signal A erzeugt, welches sich wie folgt zusammensetzt:

$$A=a*x+b*y+c*z,$$

wobei x, y, z Signalanteile der verschiedenen Eigenschaften sind.

Darüber hinaus werden mit anderen Messverfahren bspw. folgende Signale ermittelt: 2. Messverfahren: B=d*x+e*y 3. Messverfahren: C=f*y+g*z
 Aus den Signalen lässt sich somit eine bestimmte Eigenschaft eindeutig bestimmen.

Eine weitere konkrete Ausführungsform des erfindungsgemäßen Verfahrens sieht vor, dass zwei unterschiedliche Messverfahren verwendet werden, wobei sich das Signal eines Messverfahrens aus der Überlagerung zweier Eigenschaften und wobei sich das Signal des anderen Messverfahrens aus nur einer Eigenschaft zusammensetzt.

Vorteilhafterweise erzeugt hierbei das eine Messverfahren ein Signal, welches durch Überlagerung von mechanischen Schwingungen des rotierenden Körpers und der Oberflächenkontur des rotierenden Körpers erhalten wird. Das mit dem anderen Messverfahren erhaltene Signal wird hierbei nur durch mechanische Schwingungen erzeugt, d.h. es handelt sich also um eine reine Schwingungsmessung.

Die bestimmte Eigenschaft, welche hierbei ermittelt wird, ist die Oberflächenkontur des rotierenden Körpers.

Die Oberflächenkontur des rotierenden Körpers kann bspw. die Kontur der Mantelfläche einer Walze oder eines Zylinders sein. In diesem Fall werden somit bspw. mit dem ersten Messverfahren radiale Ungleichmäßigkeiten der Mantelfläche überlagert mit radialen Schwingungen der Walze gemessen, wohingegen mit dem zweiten Messverfahren nur die Schwingungen gemessen werden.

Die Oberflächenkontur des rotierenden Körpers kann auch bspw. die Kontur der Stirnfläche einer Walze oder eines Zylinders sein. In diesem Fall werden somit bspw. mit dem ersten Messverfahren axiale Ungleichmäßigkeiten der Strinfläche überlagert mit axialen Schwingungen der Walze gemessen, wohingegen mit dem zweiten Messverfahren nur die Schwingungen gemessen werden.

Es hat sich gezeigt, dass zur Durchführung des erfindungsgemäßen Verfahrens für jedes Messverfahren jeweils nur ein Messsensor erforderlich ist. Dies bedeutet, dass bspw. zur Bestimmung der Oberflächenkontur der Mantelfläche einer Walze mittels den zwei oben genannten unterschiedlichen Messverfahren (Das erste Messverfahren erzeugt ein Signal, welches durch Überlagerung von mechanischen Schwingungen des rotierenden Körpers und der Oberflächenkontur des rotierenden Körpers erhalten wird, das andere Messverfahren erzeugt ein Signal, welches nur durch mechanische Schwingungen erhalten wird) insgesamt nur zwei Messsensoren erforderlich sind, wohingegen bei dem aus dem Stand der Technik bekannten Verfahren zur Rundlaufmessung vier im Winkelbereich von 180° verteilte Messsensoren benötigt werden.

Somit ergibt sich durch das erfindungsgemäße Verfahren ein erheblicher Platz und Kostenvorteil gegenüber dem aus dem Stand der Technik bekannten Verfahren.

Es sind unterschiedliche Messverfahren denkbar, die Eigenschaften, wie bspw. mechanische Schwingung, Oberflächenkontur oder Durchbiegung oder dynamische Verformung einer rotierenden Walze zu bestimmen. Nach einer bevorzugten Ausführungsform der Erfindung arbeitet zumindest ein Messverfahren berührungslos. Hierbei können bspw. Lasersensoren und / oder induktive Sensoren und / oder Sensoren die nach dem Wirbelstromprinzip arbeiten Verwendung finden.

Konkret ist das eine Messverfahren, bei welchem ein Signal durch Überlagerung von mechanischen Schwingungen und der Oberfläche des rotierenden Körpers erhalten wird, ein Distanzmessverfahren. Dies es Messverfahren arbeitet vorteilhafterweise nach dem Triangulationsprinzip.

Das andere Messverfahren, bei welchem ein Signal nur durch die mechanischen Schwingungen des rotierenden Körpers erhalten wird, ist vorteilhafterweise ein interferometrisches Messverfahren. Dieses Messverfahren arbeitet vorteilhafterweise nach dem Laservibrometrie-Prinzip oder nach dem Radar-Doppler-Prinzip.

Konkrete Anwendungsfälle der Erfindung sind Rundlaufmessungen an Walzen in einer Papier-, Karton- oder Tissuemaschine oder einer Druckmaschine oder Rundlaufmessungen bei Walzenschleifmaschinen oder Wuchtmaschinen.

Vorteilhafterweise wird das erfindungsgemäße bei Maschinenbetriebsgeschwindigkeit der entsprechenden o.g. Maschine eingesetzt. Hierdurch ist es bspw. im Falle einer Papiermaschine möglich bei laufender Produktion den Zustand Walzen zu überwachen und regelnd einzugreifen, um den Produktionsprozess stabil zu halten.

Die Erfindung wird anhand der folgenden schematischen Zeichnung näher erläutert. Es zeigt:

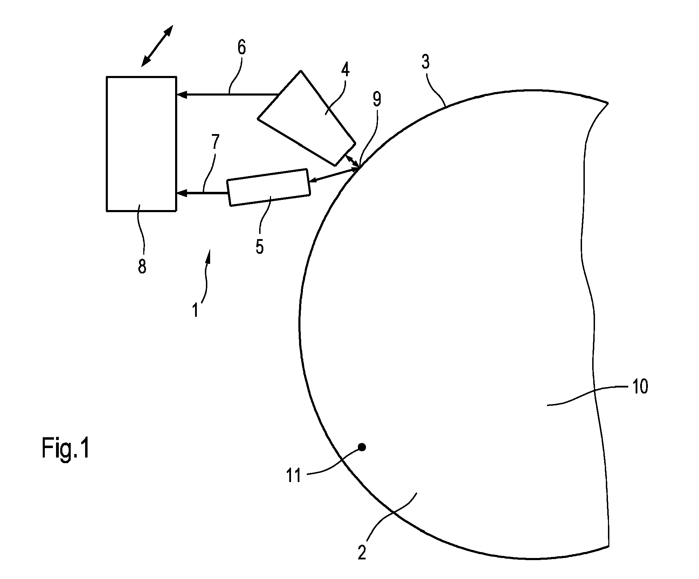

Fig. 1 einen Vorrichtung zur Durchführung des erfindungsgemäßen Verfahrens.

Die Figur 1 zeigt eine Vorrichtung 1 zur Durchführung des erfindungsgemäßen Verfahrens zur Messung einer Eigenschaft eines rotierenden Körpers.

Im vorliegenden Ausführungsbeispiel handelt es sich bei dem rotierenden Körper um eine Walze 2, die abschnittweise dargestellt ist. Die Walze 2 rotiert um eine Rotationsachse 10.

Zur Durchführung des erfindungsgemäßen Verfahrens wird durch einen ersten Messsensor 4, dieser ist ein Abstandssensor der nach dem Triangulationsprinzip arbeitet, ein Signal 6 an einem Messort 9 gemessen, welches sich aus der Überlagerung zweier Eigenschaften, nämlich der Oberflächenkontur der Walzenoberfläche 3 und den mechanischen Schwingungen der Walze 2, zusammensetzt.

Des weiteren wird mittels eines zweiten Messsensors 5, dieser ist ein reiner Schwingungssensor der nach dem Laservibrometrieprinzip arbeitet, ein Signal 7 am Messort 9 gemessen, welches sich nur aus reinen Schwingungssignalen der Walze 2 zusammensetzt.

Anzumerken ist, dass unter dem Messort 9 ein Bereich zu verstehen ist, der sowohl exakt die gleiche stelle ist oder aber zwei Messsetellen umfasst, die in einem Bereich von maximal 10mm bis 20mm voneinander entfernt angeordnet sind.

Beide Messsensoren 4 und 5 arbeiten demzufolge berührungslos.

Die beiden Signale 6 und 7 werden einer Auswerteeinheit 8 zugeführt, welche aus den beiden Signalen 6 und 7 die Oberflächenkontur der Walzenoberfläche 3 ermittelt.

Aus den beiden Signalen 6, 7 wird in der Auswerteeinheit 8 ein eindeutig bestimmtes Gleichungssystem, insbesondere lineares Gleichungssystem, erstellt und aus dem Gleichungssystem die Oberflächenkontur der Walzenoberfläche 3 entlang der Umfanglinie am Messort 9 zu ermittelt.

Um die Oberflächenkontur der Walzenoberfläche 3 über einen Teil der Breite der Walze 2 oder über die gesamte Breite der Walze 2 zu messen, ist in der vorliegenden Ausführungsform vorgesehen, dass zur Messung der Oberflächenkontur der Walzenoberfläche 3 Messungen an unterschiedlichen Messorten durchgeführt werden, wobei die Messorte 9 entlang der Rotationsachse 10 zueinander versetzt angeordnet sind.

Hierbei wird durch ein Triggersignal 11 gesteuert jeweils ein neuer Messort 9 angefahren, um die Oberflächenkontur der Walzenoberfläche 3 über die gesamte Breite der Walze 2 zu erhalten.

In der vorliegenden Ausführungsform wird das Triggersignal 11 jeweils bei einer ganzen Umdrehung der Walze 2 ausgelöst.

**Patentansprüche**

1. Verfahren zur Bestimmung einer bestimmten Eigenschaft eines rotierenden Körpers mit folgenden Schritten:

   - Messen mittels eines Messverfahrens, bei dem sich das erhaltene Signal aus N Eigenschaften zusammensetzt, wobei die zu bestimmende Eigenschaft darin enthalten ist,
   - Messen mittels zumindest eines anderen Messverfahrens, bei dem sich das erhaltene Signal bzw. die erhaltenen Signale aus nur einem Teil der N Eigenschaften zusammensetzt bzw. zusammensetzen,
   - Ermitteln der bestimmten Eigenschaft aus den erhaltenen Messsignalen.

2. Verfahren nach Anspruch 1,
   **dadurch gekennzeichnet,**
   **dass** aus den gemessenen Signalen ein eindeutig bestimmtes Gleichungssystem erstellt wird, und dass aus dem Gleichungssystem die bestimmte Eigenschaft ermittelt wird.

3. Verfahren nach Anspruch 1 oder 2,
   **dadurch gekennzeichnet,**
   **dass** mit dem zumindest einen anderen Messverfahren (N-1) Signale ermittelt werden, die sich jeweils aus der Überlagerung von (N-1) Eigenschaften zusammensetzen, die sich alle aus der Überlagerung zumindest einer gemeinsamen Eigenschaft zusammensetzen und deren Überlagerung sich in zumindest einer Eigenschaft unterscheidet.

4. Verfahren nach einem der Ansprüche 1 bis 3,
   **dadurch gekennzeichnet,**
   **dass** zwei unterschiedliche Messverfahren verwendet werden, wobei sich das Signal eines Messverfahrens aus der Überlagerung zweier Eigenschaften und wobei sich das Signal des anderen Messverfahrens aus nur einer Eigenschaft zusammensetzt.

5. Verfahren nach Anspruch 4,
   **dadurch gekennzeichnet,**
   **dass** das mit dem einen Messverfahren erhaltene Signal durch Überlagerung von mechanischen Schwingungen des rotierenden Körpers und der Oberflächenkontur des rotierenden Körpers erhalten wird und dass das mit dem anderen Messverfahren erhaltene Signal durch mechanische Schwingungen erhalten wird.

6. Verfahren nach Anspruch 4 oder 5,
   **dadurch gekennzeichnet,**
   **dass** für jedes Messverfahren jeweils nur ein Sensor verwendet wird.

7. Verfahren nach Anspruch 5,
   **dadurch gekennzeichnet,**
   **dass** die bestimmte Eigenschaft die Oberflächenkontur des rotierenden Körpers ist, insbesondere die Oberflächenkontur der Mantelfläche und / oder die Oberflächenkontur der Stirnfläche einer Walze oder eines Zylinders.

8. Verfahren nach einem der Ansprüche 1 bis 6,
   **dadurch gekennzeichnet,**
   **dass** zumindest ein Messverfahren berührungslos arbeitet.

9. Verfahren nach Anspruch 6 oder 7,
   **dadurch gekennzeichnet,**
   **dass** das eine Messverfahren, bei welchem ein Signal durch Überlagerung von mechanischen Schwingungen und der Oberfläche des rotierenden Körpers erhalten wird, ein Distanzmessverfahren ist.

**10.** Verfahren nach Anspruch 8,
**dadurch gekennzeichnet,**
**dass** das eine Messverfahren nach dem Triangulationsprinzip arbeitet.

**11.** Verfahren nach Anspruch 6 oder 7,
**dadurch gekennzeichnet,**
**dass** das andere Messverfahren, bei welchem ein Signal durch die mechanischen Schwingungen des rotierenden Körpers erhalten wird, ein interferometrisches Messverfahren ist.

**12.** Verfahren nach Anspruch 10,
**dadurch gekennzeichnet,**
**dass** das andere Messverfahren nach dem Laservibrometrie-Prinzip oder nach dem Radar-Doppler-Prinzip arbeitet.

**13.** Verfahren nach einem der Ansprüche 1 bis 12,
**dadurch gekennzeichnet,**
**dass** die Messung der bestimmten Eigenschaft in einem Abschnitt durchgeführt wird, der sich in Richtung der Rotationsachse des rotierenden Körpers erstreckt.

**14.** Verfahren nach Anspruch 13,
**dadurch gekennzeichnet,**
**dass** zur Messung der bestimmten Eigenschaft eines Abschnitts der Oberfläche Messungen an unterschiedlichen Messorten durchgeführt werden, wobei die Messorte entlang der Rotationsachse zueinander versetzt angeordnet sind.

**15.** Verfahren nach Anspruch 14,
**dadurch gekennzeichnet,**
**dass** durch ein Triggersignal gesteuert jeweils ein neuer Messort angefahren wird.

**16.** Verfahren nach Anspruch 15,
**dadurch gekennzeichnet,**
**dass** das Triggersignal jeweils bei einer ganzen Umdrehung des rotierenden Körpers ausgelöst wird.

Fig.1

EP 1 657 523 A1

Europäisches
Patentamt

**EUROPÄISCHER RECHERCHENBERICHT**

Nummer der Anmeldung

EP 05 10 9866

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/160133 A1 (MORETTI ROBERTO ET AL) 28. August 2003 (2003-08-28) | 1-4,6-8, 10,13-16 | INV. G01B11/24 |
| A | * Spalte 2, Zeile 23 - Spalte 5, Zeile 38; Abbildungen 1-3B * | 5,9,11, 12 | G01B11/245 |
| | ----- | | |
| X | US 4 184 263 A (HACHISU, MASUO ET AL) 22. Januar 1980 (1980-01-22) | 1,6-8,13 | |
| A | * Absätze [0022] - [0039]; Abbildungen 1-4 * | 2-5, 9-12, 14-16 | |
| | ----- | | |
| X | US 6 460 422 B1 (KURODA HIDEHIKO ET AL) 8. Oktober 2002 (2002-10-08) | 1,8,13 | |
| A | * Spalte 7, Zeile 29 - Spalte 10, Zeile 40; Abbildungen 1,2 * | 2-7, 9-12, 14-16 | |
| | ----- | | |
| A | EP 0 507 553 A (ARMCO INC) 7. Oktober 1992 (1992-10-07) * Seite 6, Zeile 25 - Seite 11, Zeile 26; Abbildungen 3-10 * ----- | 1-16 | |

RECHERCHIERTE SACHGEBIETE (IPC)

G01B
G01L

Der vorliegende Recherchenbericht wurde für alle Patentansprüche erstellt

| Recherchenort | Abschlußdatum der Recherche | Prüfer |
|---|---|---|
| München | 9. März 2006 | Beyfuß, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**EP 1 657 523 A1**

**ANHANG ZUM EUROPÄISCHEN RECHERCHENBERICHT
ÜBER DIE EUROPÄISCHE PATENTANMELDUNG NR.**

EP 05 10 9866

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2006

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 2003160133 | A1 | | 28-08-2003 | CN | 1446160 | A | 01-10-2003 |
| | | | | WO | 0194175 | A1 | 13-12-2001 |
| | | | | EP | 1292479 | A1 | 19-03-2003 |
| | | | | IT | TO20000535 | A1 | 06-12-2001 |
| | | | | JP | 2003535755 | T | 02-12-2003 |
| US 4184263 | A | | 22-01-1980 | KEINE | | | |
| US 6460422 | B1 | | 08-10-2002 | JP | 2002022564 | A | 23-01-2002 |
| EP 0507553 | A | | 07-10-1992 | AT | 137858 | T | 15-05-1996 |
| | | | | AU | 642081 | B2 | 07-10-1993 |
| | | | | AU | 1298192 | A | 08-10-1992 |
| | | | | BR | 9201131 | A | 24-11-1992 |
| | | | | CA | 2063887 | A1 | 02-10-1992 |
| | | | | DE | 69210459 | D1 | 13-06-1996 |
| | | | | JP | 7174544 | A | 14-07-1995 |
| | | | | US | 5117081 | A | 26-05-1992 |

EPO FORM P0461

Für nähere Einzelheiten zu diesem Anhang : siehe Amtsblatt des Europäischen Patentamts, Nr.12/82

8